# EUROPÄISCHE PATENTSCHRIFT

(11) **EP 2 195 202 B1**
(45) Veröffentlichungstag und Bekanntmachung des Hinweises auf die Patenterteilung: **31.08.2011**
(21) Anmeldenummer: 08774015.5
(22) Anmeldetag: 17.07.2008
(51) Int. Cl.: B60R 21/205

(54) **ARMATURENTAFELTRÄGERTEIL MIT EINEM BEIFAHRER-AIRBAGMODUL**
INSTRUMENT PANEL CARRIER PART HAVING A FRONT PASSENGER AIRBAG MODULE
ÉLÉMENT PORTEUR DE TABLEAU DE BORD AVEC UN MODULE AIRBAG DE PASSAGER AVANT

(30) Priorität: 27.09.2007 DE 102007046212
(43) Veröffentlichungstag der Anmeldung: 16.06.2010
(73) Patentinhaber: GM Global Technology Operations LLC, Detroit, MI 48265-3000 (US)
(72) Erfinder: RICK, Ulrich, 55595 Braunweiler (DE); WAGNER, Udo, 65428 Rüsselsheim (DE)
(74) Vertreter: Strauss, Peter
(86) Internationale Anmeldenummer: PCT/EP2008/005837
(87) Internationale Veröffentlichungsnummer: WO 2009/043399

(56) Entgegenhaltungen:
- EP-A- 0 826 564
- DE-A1- 19 949 170
- DE-A1-102004 023 682

## Beschreibung

Die vorliegende Erfindung betrifft ein Armaturentafelträgerteil nach dem Oberbegriff des Anspruchs 1 mit einer Airbag-Austrittsöffnung und einem Modulbefestigungsrahmen, an dem ein Beifahrer-Airbagmodul unmittelbar und lösbar befestigt ist, wobei der Modulbefestigungsrahmen integral mit dem Armaturentafelträgerteil ausgebildet ist.

Um die passive Sicherheit eines Beifahrers eines Kraftfahrzeuges zu erhöhen, ist es bekannt, auf der dem Fahrgastraum abgewandten Seite einer Armaturentafel ein Beifahrer-Airbagmodul so anzuordnen, dass ein sich entfaltender Luftsack des Beifahrer-Airbagmoduls durch eine Airbag-Austrittsöffnung in der Armaturentafel, vorzugsweise unter Öffnung einer Klappe, Aufreißen einer Perforation oder dergleichen austritt, um den sich unter Trägheitskräften nach vorne verlagernden Beifahrer abzufangen. Die aus dem Rückstoß des sich entfaltenden Luftsackes und insbesondere eines diesen aufblasenden Gasgenerators resultierenden Reaktionskräfte müssen dabei im Kraftfahrzeug aufgenommen und abgestützt werden, um einem ordnungsgemäßen Entfaltungsvorgang des Luftsackes zu gewährleisten.

Da Armaturentafeln aus gestalterischen, Gewichts- und Herstellungsgründen häufig nur mit einer geringen Festigkeit ausgebildet sind, ist es beispielsweise aus der DE 197 45 894 A1 oder der DE 36 11 486 A1 bekannt, das Beifahrer - Airbagmodul an einem stabileren Querträger zu befestigen. Die DE 44 15 468 C1, die DE 101 08 685 C1 oder die DE 196 46 548 A1 schlagen neben der Befestigung an dem Querträger zusätzlich eine Festlegung an der Armaturentafel vor. Da diese, wie ausgeführt, im Allgemeinen eine geringere Festigkeit aufweist, schlagen die genannten Druckschriften zusätzlich ein separates, vorzugsweise metallisches Verbindungselement vor, über das das Beifahrer - Airbagmodul indirekt an der Armaturentafel befestigt wird.

Solche Lösungen sind hinsichtlich des Herstellungs- und Montageaufwandes sowie des Gewichtes nicht optimal. Daher schlägt die DE 10 2004 023 682 A1 ein Armaturentafelträgerteil nach dem Oberbegriff des Anspruches 1 vor, welches aus Kunststoff hergestellt ist und im Bereich einer Airbag - Austrittsöffnung einen integral mit dem Armaturentafelträgerteil ausgebildeten Modulbefestigungsrahmen aufweist, der die Gestalt eines doppelwandigen, offenen Topfes besitzt und an dem ein Beifahrer - Airbagmodul durch Einschieben in Schussrichtung unter Verrasten von Rastnasen in entsprechenden Ausnehmungen des Modulbefestigungsrahmens lösbar befestigt ist. Um den Modulbefestigungsrahmen zu versteifen, greift ein Airbag - Deckel zwischen die beiden Wände des doppelwandigen Topfes ein, der mit Verstärkungsrippen gegen das Armaturentafelträgerteil abgestützt ist.

Obwohl durch die doppelwandige und rippenverstärkte Ausbildung des integralen Modulbefestigungsrahmens das Armaturentafelträgerteil im Bereich der Airbag - Austrittsöffnung so verstärkt ist, dass es die Reaktionskräfte des aktivierten Beifahrer - Airbagmoduls aufnehmen und abstützen kann, müssen diese vollständig über die Rastverbindung des in Schussrichtung eingeschobenen Beifahrer - Airbagmoduls eingeleitet werden und belasten so die Rastverbindung ungünstig.

Aus der gattungsbildenden EP 0 826 564 A1 ist ein Armaturentafelträgerteil mit einer Airbag-Austrittsöffnung und einem Modulbefestigungsbereich bekannt, an dem ein Beifahrer-Airbagmodul durch Schrauben lösbar befestigt ist. Der Modulbefestigungsbereich wird durch ein separates Verstärkungselement verstärkt und daher weder mehrwandig ausgebildet noch mit Rippen verbunden.

Aus der DE 199 49 170 A1 ist ein Armaturentafelträgerteil mit einer Airbag-Austrittsöffnung und einem Modulbefestigungsbereich bekannt. Zur Befestigung eines Beifahrer-Airbagmoduls wird dieses in einerseits an einem separaten Klappeneinsatz eingehängt, andererseits mit einem separaten Armaturenbretteinsatz verschraubt und zudem durch eine separate Armaturenbrettverstärkung am Rahmen des Fahrzeugkörpers befestigt.

Aufgabe der vorliegenden Erfindung ist es daher, ein Armaturentafelträgerteil mit einem Beifahrer - Airbagmodul zur Verfügung zu stellen, das eine erhöhte Verbindungsfestigkeit zwischen Armaturentafelträgerteil und Beifahrer - Airbagmodul aufweist.

Diese Aufgabe wird durch die Merkmale des Anspruchs 1 gelöst. Vorteilhafte Ausführungsformen der Erfindung sind Gegenstand der Unteransprüche.

Ein erfindungsgemäßes Armaturentafelträgerteil weist eine Airbag - Austrittsöffnung auf, durch die ein sich entfaltender Luftsack eines Beifahrer - Airbagmoduls austreten kann. Die Airbag - Austrittsöffnung kann dabei vorteilhafterweise durch eine Folie, eine Klappenanordnung oder dergleichen abgedeckt sein und erst durch den sich entfaltenden Luftsack geöffnet werden. Integral mit dem Armaturentafelträgerteil ist ein Modulbefestigungsrahmen ausgebildet, an dem das Beifahrer - Airbagmodul unmittelbar, d. h. direkt ohne Zwischenschaltung separater Bauteile lösbar befestigt ist.

Nach einer ersten Ausführung der vorliegenden Erfindung erfolgt die lösbare Befestigung des Beifahrer - Airbagmoduls an dem Modulbefestigungsrahmen mittels Schrauben. Hierzu können bevorzugt am Modulbefestigungsrahmen Befestigungsflächen zur Auflage des Beifahrer - Airbagmoduls vorgesehen sein, mit denen das Beifahrer - Airbagmodul verschraubt ist. Eine solche Schraubverbindung an dem Modulbefestigungsrahmen erlaubt eine gleichermaßen montagefreundliche und, beispielsweise zu Wartungs- oder Austauschzwecken lösbare Befestigungen des Beifahrer - Airbagmoduls an dem Armaturentafelträgerteil, und zugleich eine feste Verbindung, über die die Reaktionskräfte des sich entfaltenden Luftsackes und insbesondere eines diesen befüllenden Gasgenerators des Beifahrer - Airbagmoduls aufgenommen und in das Armaturentafelträgerteil abgeleitet werden können. Hierdurch wird eine zuverlässige Befestigung des Beifahrer - Airbagmoduls an dem Armaturentafelträgerteil geschaffen und die Verbindungsfestigkeit erhöht.

Gemäß einer zweiten Ausführung der vorliegenden Erfindung erfolgt die Befestigung des Beifahrer - Airbagmoduls an dem Modulbefestigungsrahmen mittels quer zu einer Schussrichtung des Beifahrer - Airbagmoduls in Taschen eingeschobene Vorsprünge des Beifahrer - Airbagmoduls. Vorzugsweise können diese Vorsprünge und/oder diese Taschen steif ausgebildet sein, da sie keine Rastverbindung bilden, deren Montage notwendig ein elastisches Nachgeben wenigstens eines Verbindungselementes erfordert, sondern eingeschoben werden.

Da die Vorsprünge quer zu der Schussrichtung des Beifahrer - Airbagmoduls in die Taschen eingeschoben werden, können sie, insbesondere verglichen mit einer Rastverbindung eines in Schussrichtung eingeschobenen Beifahrer - Airbagmoduls, höhere Reaktionskräfte aufnehmen und abstützen. Im Gegensatz zu einer Rastverbindung, deren Lösung wiederum eine elastische Deformation wenigstens eines Verbindungselementes erfordert und zudem durch die geometrische Gestaltung von Rastnase bzw. -aufnahme entgegen der Montagerichtung erschwert ist, ist die Demontage eines Beifahrer - Airbagmoduls, das mittels quer zu der Schussrichtung in Taschen eingeschobenen Vorsprüngen befestigt ist, beispielsweise zu Wartungs- oder Austauschzwecken vereinfacht.

Die bei den oben genannten Ausführungsformen können auch miteinander kombiniert sein, indem Vorsprünge des Beifahrer - Airbagmoduls quer zu dessen Schussrichtung in Taschen in dem Modulbefestigungsrahmen eingeschoben und das Beifahrer - Airbagmodul zusätzlich mit dem Modulbefestigungsrahmen verschraubt ist. Hierdurch können die Vorteile beider Ausführungen miteinander kombiniert werden. Insbesondere können die im Wesentlichen in Schussrichtung wirkenden Reaktionskräfte über die quer zu dieser in die Taschen eingeschobenen, vorzugsweise steifen, Vorsprünge aufgenommen werden, während die Verschraubung das Beifahrer-Airbagmodul quer zur Schussrichtung festlegt. Auf diese Weise kann beispielsweise das Beifahrer - Airbagmodul zunächst quer zur Schussrichtung bewegt werden, so dass seine Vorsprünge in die Taschen des Modulbefestigungsrahmens eingreifen, und anschließend durch Verschrauben auch in dieser Querrichtung fixiert werden.

Bei dieser kombinierten Ausführung kann die Verschraubung über die in die Taschen eingeschobenen Vorsprünge erfolgen. Zusätzlich oder alternativ kann das Beifahrer - Airbagmodul auch an anderen Befestigungsflächen des Modulbefestigungsrahmens verschraubt sein.

Bevorzugt umfasst ein Armaturentafelträgerteil nach einer der vorgenannten Ausführung eine oder mehrere Befestigungsflächen zur Auflage bzw. Abstützung des Beifahrer - Airbagmoduls, die im Wesentlichen quer zur Schussrichtung des Beifahrer - Airbagmoduls angeordnet sind. Wird, wie vorstehend ausgeführt, das Beifahrer - Airbagmodul an solchen Befestigungsflächen verschraubt, oder sind solche Befestigungsflächen in Taschen ausgebildet, in die Vorsprünge des Beifahrer - Airbagmoduls quer zu dessen Schussrichtung eingeschoben sind, ergibt sich eine besonders günstige Einleitung und Verteilung der abzustützenden Reaktionskräfte. Außerdem wird hierdurch eine besonders kompakte raumsparende Anordnung des Beifahrer - Airbagmoduls ermöglicht.

Bevorzugt sind eine oder mehrere Befestigungsflächen längs des Umfanges der Airbag - Austrittsöffnung angeordnet. Dies verringert die Hebelarme und damit die von der Befestigung des Beifahrer - Airbagmoduls an dem Modulbefestigungsrahmen aufzunehmenden Biegemomente, die aus Rückstoßkräften des Beifahrer - Airbagmoduls resultieren.

Bevorzugt können Befestigungsflächen längs einander gegenüberliegender Seiten der Airbag-Austrittsöffnung angeordnet sein, um so ein Kippmoment des Beifahrer - Airbagmoduls abzustützen. Dabei können Befestigungsflächen gleichermaßen einander gegenüberliegend oder gegeneinander versetzt angeordnet sein, um beispielsweise die Montage zu vereinfachen oder die aufzunehmenden Kräfte gleichmäßiger zu verteilen.

Ist die Schussrichtung des Beifahrer - Airbagmoduls im Wesentlichen senkrecht zu einer Oberfläche des Armaturentafelträgerteils, insbesondere einer dem Fahrgastraum zugewandten Außenseite und/oder einer dem Fahrgast abgewandten Rückseite des Armaturentafelträgerteils ausgerichtet, ist es bevorzugt, eine oder mehrere Befestigungsflächen im Wesentlichen parallel zu dieser Oberfläche des Armaturentafelträgerteils auszubilden, um eine besonders günstige Kraftverteilung und eine kompakte, kurze Bauform zu erreichen.

Vorteilhafterweise kann der Modulbefestigungsrahmen längs des Umfanges der Airbag - Austrittsöffnung durchgehend, d. h. längs des gesamten Umfanges, oder teilweise, d. h. in Bereichen des Umfanges doppel- oder mehrwandig ausgebildet sein. Hierdurch wird der integral mit dem Armaturentafelträgerteil ausgebildete Modulbefestigungsrahmen auf einfache Weise verstärkt und erhöht so die Zuverlässigkeit der Befestigung des Beifahrer-Airbagmoduls.

Es hat sich gezeigt, dass insbesondere eine doppel- oder mehrwandige Ausbildung des Modulbefestigungsrahmens in einem oder mehreren Eckbereichen der Airbag-Austrittsöffnung die Tragfähigkeit bzw. Festigkeit maßgeblich erhöht, da in diesen Bereichen aufgrund von Kerbwirkungen einerseits besonders hohe Kräfte auftreten und andererseits, beispielsweise herstellungsbedingt, Materialinhomogenitäten den Modulbefestigungsrahmen schwächen.

Um den Modulbefestigungsrahmen zu verstärken, ist es auch vorteilhaft, diesen über eine oder mehrere Rippen mit dem übrigen Armaturentafelträgerteil zu verbinden. Ist der Modulbefestigungsrahmen dabei doppel- oder mehrwandig ausgebildet, können die Rippen zwischen zwei Wänden des Modulbefestigungsrahmens und/oder an einer bezüglich der Airbag - Austrittsöffnung äußeren Wand des Modulbefestigungsrahmens angeordnet sein.

Insbesondere, wenn der Modulbefestigungsrahmen in Folge einer doppel- oder mehrwandigen Ausführung und/oder einer Versteifung durch Rippen bereits eine hohe Festigkeit aufweist, kann dieser erfindungsgemäß einstückig, d. h. ohne ein separates Verstärkungselement ausgebildet sein, was gleichermaßen Gewicht und einen Montageschritt spart.

Aufgrund einer entsprechend festen Ausführung des integral mit dem Armaturentafelträgerteil ausgebildeten Modulbefestigungsrahmens und der unmittelbaren Befestigung des Beifahrer - Airbagmoduls an diesem kann vorteilhafterweise auf eine Befestigung an anderen Fahrzeugstrukturen, insbesondere einem Querträger verzichtet werden, was die Gestaltungsfreiheit erhöht und zusätzlich Montageaufwand und Gewicht erspart.

Bevorzugt ist das Armaturentafelträgerteil und der mit diesem integral ausgebildete Modulbefestigungsrahmen aus Kunststoff hergestellt, insbesondere aus thermoplastischem Kunststoff, beispielsweise Polyproplen oder dergleichen.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: ein Armaturentafelträgerteil nach einer ersten Ausführung der vorliegenden Erfindung in der Draufsicht von hinten;
- Fig. 2: einen Schnitt des Armaturentafelträgerteils nach Fig. 1 längs der Linie II-II;
- Fig. 3: ein Armaturentafelträgerteil nach einer zweiten Ausführung der vorliegenden Erfindung in der Draufsicht von hinten; und
- Fig. 4: einen Schnitt des Armaturentafelträgerteils nach Fig. 3 längs der Linie IV-IV.

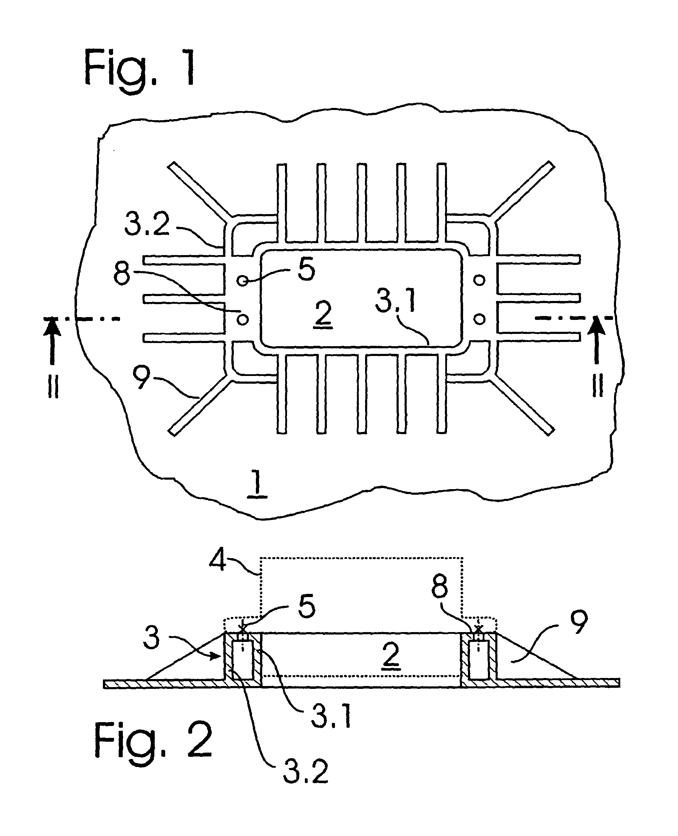

Ein Armaturentafelträgerteil 1 nach einer ersten Ausführung der vorliegenden Erfindung ist in Fig. 1 in der Draufsicht von hinten, d. h. einer einem Fahrgastraum abgewandten Seite, und in Fig. 2 in einem Schnitt längs der Linie II - II in Fig. 1 dargestellt.

Das Armaturentafelträgerteil 1 ist aus Kunststoff hergestellt und weist eine im Wesentlichen rechteckförmige Airbag - Austrittsöffnung 2 auf, die durch eine perforierte Folie (nicht dargestellt) gegenüber dem Fahrgastraum verschlossen ist und durch einen sich entfaltenden Luftsack eines Beifahrer - Airbagmoduls 4 zerstörend geöffnet werden kann.

Längs des Umfanges der Airbag - Austrittsöffnung 2 ist ein Modulbefestigungsrahmen 3 (vgl. Fig. 2) integral mit dem Armaturentafelträgerteil 1 ausgebildet. Der Modulbefestigungsrahmen 3 weist eine bezüglich der Airbag - Austrittsöffnung 2 innere Wand 3.1 auf, die sich kontinuirlich längs des gesamten Umfanges 2 der Airbag - Austrittsöffnung 2 erstreckt. In einem Abstand zu dieser inneren Wand 3.1 weist der Modulbefestigungsrahmen 3 eine im Wesentlichen hierzu parallele, bezüglich der Airbag - Austrittsöffnung 2 äußere Wand 3.2 auf. Diese erstreckt sich längs der Schmalseiten (links, rechts in Fig. 1) und über die mit einem Radius ausgebildeten Eckbereiche der Airbag - Austrittsöffnung 2, so dass der Modulbefestigungsrahmen 3 insbesondere in diesen Eckbereichen doppelwandig ausgebildet ist. An der inneren Wand 3.1 bzw. der äußeren Wand 3.2 sind Verstärkungsrippen 9 ausgebildet, die mit dem Armaturentafelträgerteil 1 verbunden sind und den Modulbefestigungsrahmen 3 gegen dieses abstützen.

Im Bereich der Schmalseiten (links, rechts in Fig. 1) der Airbag - Austrittsöffnung 2 sind die innere und äußere Wand 3.1, 3.2 des Modulbefestigungsrahmens 3 über je eine Befestigungsfläche 8 verbunden, die integral mit der inneren und äußeren Wand 3.1, 3.2 ausgebildet ist. In diesen Befestigungsflächen 8 sind Bohrungen vorgesehen, durch die in Fig.2 angedeutete Schrauben durchgreifen können, um ein Beifahrer - Airbagmodul 4, welches zur besseren Übersichtlichkeit in Fig. 1 nicht gezeigt und in Fig. 2 strichliert angedeutet ist, mit dem Modulbefestigungsrahmen 3 verschraubt ist. Hierzu können die Bohrungen entsprechende Innengewinde aufweisen, in die die Schrauben 5 eingeschraubt werden. Da der Modulbefestigungsrahmen 3 jedoch aus Kunststoff hergestellt ist, sind in einer nicht dargestellten bevorzugten Weiterbildung zwischen der inneren Wand 3. 1 und der äußeren Wand 3.2 unterhalb der Befestigungsflächen 8 Gegenmuttern angeordnet, in die die Schrauben 5 eingeschraubt werden können. Da der Modulbefestigungsrahmen 3 nur im Bereich der Schmalseiten und Eckbereiche der Airbag - Austrittsöffnung 2 doppelwandig ausgebildet ist, können diese Gegenmuttern (nicht dargestellt) problemlos an entsprechender Stelle montiert werden.

Durch die Verschraubung des Beifahrer - Airbagmoduls 4 mittels der Schrauben 5 an dem Modulbefestigungsrahmen 3, der durch die teilweise doppelwandige, integrale und rippenverstärkte Ausführung eine hohe Festigkeit und Steifigkeit aufweist, können Reaktionskräfte, die aus Rückstoßkräften des Beifahrer - Airbagmoduls resultieren (nach oben in Fig. 2) von den Schrauben 5 besonders gut aufgenommen und über den steifen Modulbefestigungsrahmen 3 in das Armaturentafelträgerteil 1 weitergeleitet werden. Hierdurch ergibt sich eine gleichermaßen montagefreundliche wie zuverlässige Befestigung des Beifahrer - Airbagmoduls.

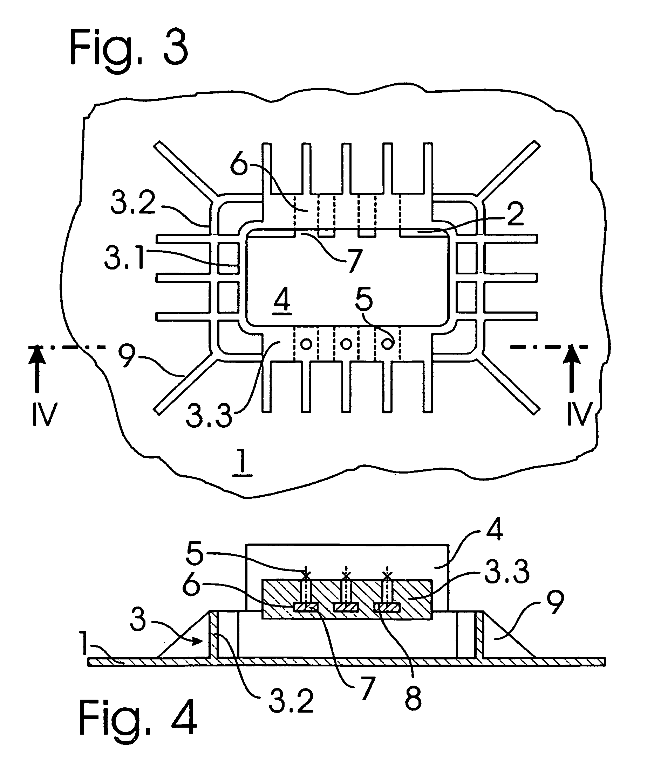

Die Figuren 3 und 4 zeigen in den Figuren 1,2 entsprechender Darstellung ein Armaturentafelträgerteil 1 nach einer zweiten Ausführung der vorliegenden Erfindung. Der ersten Ausführung entsprechende Merkmale bzw. Bauteile sind mit identischen Bezugszeichen bezeichnet, so dass nachfolgend nur auf die Unterschiede zwischen der ersten und zweiten Ausführung eingegangen wird.

Der Modulbefestigungsrahmen 3 ist bei der zweiten Ausführung längs des gesamten Umfanges der Airbag - Austrittsöffnung 2 durchgängig doppelwandig mit einer bezüglich der Airbag - Austrittsöffnung 2 inneren Wand 3. 1 und äußeren Wand 3.2 ausgebildet. Die Verstärkungsrippen 9 sind sowohl zwischen der inneren und äußeren Wand 3.1, 3.2, als auch auf der der inneren Wand 3.1 gegenüberliegenden Seite der äußeren Wand 3.2 ausgebildet und durchgreifen gewissermaßen die äußere Wand 3.2. An den einander gegenüberliegenden Längsseiten (oben, unten in Fig.3) der Airbag - Austrittsöffnung 2 sind die innere und äußere Wand 3.1, 3.2 über einen Verbindungsbereich 3.3 verbunden, der integral mit den beiden Wänden 3.1, 3.2 ausgebildet ist.

In dem Verbindungsbereich 3.3 sind Taschen 6 ausgebildet, die sich quer zur Schussrichtung des Beifahrer - Airbagmoduls 4 durch den Verbindungsbereich 3.3 hindurch erstrecken. In einer nicht dargestellten Weiterbildung der gezeigten Ausführung ist der Verbindungsbereich 3.3 auf einer oder beiden Längsseiten der Airbag - Austrittsöffnung nicht durchgängig mit der gleichen Wandhöhe ausgebildet, sondern weist zwischen den Bereichen, in denen die Taschen 6 angeordnet sind, Aussparungen auf, um Material und Gewicht zu sparen.

Das Beifahrer - Airbagmodul 4, welches in den Figuren 3,4 nur schematisch angedeutet ist, weist auf einander gegenüberliegenden Längsseiten steife Vorsprünge 7 auf, die in die Taschen 6 quer zur Schussrichtung eingeschoben werden können.

Ein Verbindungsbereich 3.3 (unten in Fig. 3) weist ebenso wie die Vorsprünge 7 des Beifahrer - Airbagmoduls 4 Bohrungen auf, durch die Schrauben 5 eingeschraubt werden können.

Zur Montage des Beifahrer - Airbagmoduls 4 nach der zweiten Ausführung werden zunächst dessen in Fig. 3 obere Vorsprünge 7 quer zur Schussrichtung, d. h. in Fig. 3 nach oben in die entsprechenden komplementären Taschen 6 eingeschoben und liegen auf Befestigungsflächen 8 bildenden Seiten der Taschen 6 auf.

Das Beifahrer - Airbagmodul 4 ist in Richtung der einander gegenüberliegenden Verbindungsbereiche 3.3 des Modulbefestigungsrahmens 3 kürzer als der Abstand der inneren Wände 3.1. Daher können die in Fig.3 oberen Vorsprünge 7 des Beifahrer - Airbagmoduls 4 zunächst soweit in die Taschen 6 eingeschoben werden, bis das Beifahrer - Airbagmodul 4 an der in Fig. 3 oberen inneren Wand 3.1 anliegt. Dies ermöglicht das anschließende Verkippen des Beifahrer - Airbagmoduls 4 derart, dass auch seine in Fig. 3 unteren Vorsprünge 7 mit den entsprechenden Taschen 6 fluchten. Anschließend wird das Beifahrer - Airbagmodul 4 in Fig. 3 nach unten verschoben, wobei seine in Fig. 3 unteren Vorsprünge 7 quer zur Schussrichtung in die entsprechenden Taschen 6 eingeschoben werden. Liegt das Beifahrer - Airbagmodul 4 an der in Fig. 3 unteren inneren Wand 3.1 an, fluchten die Bohrungen im in Fig.3 unteren Verbindungsbereich 3.3 und den Vorsprüngen 7, so dass die Schrauben 5 eingeschraubt werden können und das Beifahrer - Airbagmodul 4 quer zur Schussrichtung fixieren.

Durch die quer zur Schussrichtung des Beifahrer - Airbagmoduls 4, die in Fig. 4 von oben nach unten verläuft, in die komplementären Taschen 6 eingeschobenen Vorsprünge 7 sowie deren Verschraubung mit dem Modulbefestigungsrahmen 3 ergibt sich eine ebenso montagefreundliche wie zuverlässige Verbindung zwischen Beifahrer - Airbagmodul 4 und Armaturentafelträgerteil 1. Da die Vorsprünge 7 quer zur Schussrichtung in die Taschen 6 eingeschoben werden und nicht verrasten, können sowohl die Vorsprünge als auch der Modulrahmen 3 vorteilhafterweise steif ausgebildet werden.

### Bezugszeichenliste

| | |
|---|---|
| 1 | Armaturentafelträgerteil |
| 2 | Airbag-Austrittsöffnung |
| 3 | Modulbefestigungsrahmen |
| 3.1 | bezüglich der Airbag-Austrittsöffnung innere Wand des Modulbefestigungsrahmens |
| 3.2 | bezüglich der Airbag-Austrittsöffnung äußere Wand des Modulbefestigungsrahmens |
| 3.3 | Verbindungsbereich |
| 4 | Beifahrer-Airbagmodul |
| 5 | Schraube |
| 6 | Tasche |
| 7 | Vorsprung |
| 8 | Befestigungsfläche |
| 9 | Rippe |

## Patentansprüche

1. Armaturentafelträgerteil (1) mit einer Airbag-Austrittsöffnung (2) und einem Modulbefestigungsrahmen (3), an dem ein Beifahrer-Airbagmodul (4) unmittelbar und lösbar befestigt ist, wobei der Modulbefestigungsrahmen (3) integral mit dem Armaturentafelträgerteil (1) ausgebildet ist,
**dadurch gekennzeichnet, dass**
der Modulbefestigungsrahmen (3) einstückig ohne ein separates Verstärkungselement ausgebildet ist; und dass
das Beifahrer-Airbagmodul (4) an dem Modulbefestigungsrahmen (3) mittels Schrauben (5) und/oder mittels quer zu einer Schussrichtung des Beifahrer-Airbagmoduls (4) in Taschen (6) des Modulbefestigungsrahmens (3) eingeschobenen Vorsprüngen (7) des Beifahrer-Airbagmoduls (4) befestigt ist.

2. Armaturentafelträgerteil (1) nach Anspruch 1, **dadurch gekennzeichnet, dass** der Modulbefestigungsrahmen (3) Befestigungsflächen (8) zur Auflage des Beifahrer-Airbagmoduls (4) aufweist, die im Wesentlichen quer zur Schussrichtung des Beifahrer-Airbagmoduls (4) angeordnet sind.

3. Armaturentafelträgerteil (1) nach Anspruch 2, **dadurch gekennzeichnet, dass** Befestigungsflächen (8) längs des Umfangs der Airbag-Austrittsöffnung (2) angeordnet sind.

4. Armaturentafelträgerteil (1) nach Anspruch 3, **dadurch gekennzeichnet, dass** Befestigungsflächen (6) längs einander gegenüberliegender Seiten der Airbag-Austrittsöffnung (2) einander gegenüberliegend oder gegeneinander versetzt angeordnet sind.

5. Armaturentafelträgerteil (1) nach einem der vorhergehenden Ansprüche 2 bis 4, **dadurch gekennzeichnet, dass** eine oder mehrere Befestigungsflächen (8) in einer bzw. mehreren Taschen (6) des Modulbefestigungsrahmens (3) ausgebildet sind.

6. Armaturentafelträgerteil (1) nach einem der vorhergehenden Ansprüche 2 bis 5, **dadurch gekennzeichnet, dass** eine oder mehrere Befestigungsflächen (6) mit dem Beifahrer-Airbagmodul (4) verschraubt sind.

7. Armaturentafelträgerteil (1) nach einem der vorhergehenden Ansprüche 2 bis 6, **dadurch gekennzeichnet, dass** eine oder mehrere Befestigungsflächen 8 im Wesentlichen parallel zu einer Oberfläche des Armaturentafelträgerteils 1 ausgebildet sind.

8. Armaturentafelträgerteil (1) nach einem der vorhergehenden Ansprüche, **dadurch gekennzeichnet, dass** der Modulbefestigungsrahmen (3) längs des Umfangs der Airbag-Austrittsöffnung 2 teilweise oder durchgehend mehrwandig, insbesondere doppelwandig ausgebildet ist.

9. Armaturentafelträgerteil (1) nach Anspruch 8, **dadurch gekennzeichnet, dass** der Modulbefestigungsrahmen (3) in einem Eckbereich der Airbag-Austrittsöffnung (2) mehrwandig, insbesondere doppelwandig ausgebildet ist.

10. Armaturentafelträgerteil (1) nach einem der vorhergehenden Ansprüche, **dadurch gekennzeichnet, dass** der Modulbefestigungsrahmen (3) über Rippen (9) mit dem Armaturentafelträgerteil (1) verbunden ist.

11. Armaturentafelträgerteil (1) nach Anspruch 10, **dadurch gekennzeichnet, dass** der Modulbefestigungsrahmen (3) längs des Umfangs der Airbag-Austrittsöffnung (2) durchgehend oder teilweise doppelwandig ausgebildet ist und die Rippen (9) mit einer bezüglich der Airbag-Austrittsöffnung inneren und/oder äußeren Wand (3.1, 3.2) des Modulbefestigungsrahmens (3) verbunden sind.

12. Armaturentafelträgerteil (1) nach einem der vorhergehenden Ansprüche, **dadurch gekennzeichnet, dass** das Beifahrer-Airbagmodul (4) ausschließlich an dem Modulbefestigungsrahmen (3) befestigt ist.

13. Armaturentafelträgerteil (1) nach einem der vorhergehenden Ansprüche, **dadurch gekennzeichnet, dass** es aus einem Kunststoff hergestellt ist.

## Claims

1. An instrument panel carrier part (1), comprising an airbag outlet opening (2) and a module fastening frame (3), to which a front passenger airbag module (4) is directly and detachably fastened, with the module fastening frame (3) being arranged as an integral part with the instrument panel carrier (1), **characterized in that** the module fastening frame (3) is arranged as an integral part without any separate reinforcing element, and that the front passenger airbag module (4) is fastened to the module fastening frame (3) by means of screws (5) and/or by means of projections (7) of the front passenger airbag module (4), which projections (7) are inserted into pockets (6) of the module fastening frame (3) transversely to the deployment direction of the passenger airbag module (4).

2. An instrument panel carrier part (1) according to claim 1, **characterized in that** the module fastening frame (3) comprises fastening areas (8) for supporting the front passenger airbag module (4), which areas (8) are arranged substantially transversely to the deployment direction of the front passenger airbag module (4).

3. An instrument panel carrier part (1) according to claim 2, **characterized in that** the fastening areas (8) are arranged along the circumference of the airbag outlet opening (2).

4. An instrument panel carrier part (1) according to claim 3, **characterized in that** the fastening areas (6) are arranged opposite of one another or offset in relation to each other along mutually opposite sides of the airbag outlet opening (2).

5. An instrument panel carrier part (1) according to one of the preceding claims 2 to 4, **characterized in that** one or several fastening areas (8) are arranged in one or several pockets (6) of the module fastening frame (3).

6. An instrument panel carrier part (1) according to one of the preceding claims 2 to 5, **characterized in that** one or several fastening areas (6) are screwed together with the front passenger airbag module (4).

7. An instrument panel carrier part (1) according to one of the preceding claims 2 to 6, **characterized in that** one or several fastening areas (8) are arranged substantially parallel to a surface of the instrument panel carrier part (1).

8. An instrument panel carrier part (1) according to one of the preceding claims, **characterized in that** the module fastening frame (3) is arranged with multiple walls, especially double walls, partly or continuously along the circumference of the airbag outlet opening (2).

9. An instrument panel carrier part (1) according to claim 8, **characterized in that** the module fastening frame (3) is arranged with multiple walls, especially double walls, in a corner region of the airbag outlet opening (2).

10. An instrument panel carrier part (1) according to one of the preceding claims, **characterized in that** the module fastening frame (3) is connected by ribs (9) with the instrument panel carrier part (1).

11. An instrument panel carrier part (1) according to claim 10, **characterized in that** the module fastening frame (3) is provided with a continuously or partly double-walled configuration along the circumference of the airbag outlet opening (2), and the ribs (9) are connected with a wall (3.1, 3.2) of the module fastening frame (3), which wall (3.1, 3.2) is the inner and/or outer one with respect to the airbag outlet opening.

12. An instrument panel carrier part (1) according to one of the preceding claims, **characterized in that** the front passenger airbag module (4) is only fastened to the module fastening frame (3).

13. An instrument panel carrier part (1) according to one of the preceding claims, **characterized in that** it is made of a plastic material.

## Revendications

1. Élément de support de tableau de bord (1) avec une ouverture de sortie de coussin gonflable de protection (2) et un cadre de fixation de module (3) auquel un module de coussin gonflable de protection pour passager (4) est fixé directement et de façon amovible, le cadre de fixation de module (3) étant réalisé d'un seul tenant avec l'élément de support de tableau de bord (1), **caractérisé en ce que** le cadre de fixation de module (3) est réalisé d'un seul tenant sans élément de renfort séparé, et **en ce que** le module de coussin gonflable de protection pour passager (4) est fixé au cadre de fixation de module (3) au moyen de vis (5) et/ou au moyen de saillies (7) du module de coussin gonflable de protection pour passager (4) insérées dans des poches (6) du cadre de fixation de module (3) perpendiculairement à une direction de projection du module de coussin gonflable de protection pour passager (4).

2. Élément de support de tableau de bord (1) selon la revendication 1, **caractérisé en ce que** le cadre de fixation de module (3) présente des surfaces de fixation (8) pour l'appui du module de coussin gonflable de protection pour passager (4) qui sont disposées de façon sensiblement perpendiculaire à la direction de projection du module de coussin gonflable de protection pour passager (4).

3. Élément de support de tableau de bord (1) selon la revendication 2, **caractérisé en ce que** des surfaces de fixation (8) sont disposées le long de la circonférence de l'ouverture de sortie du coussin gonflable de protection (2).

4. Élément de support de tableau de bord (1) selon la revendication 3, **caractérisé en ce que** des surfaces de fixation (6) sont disposées le long de côtés opposés de l'ouverture de sortie du coussin gonflable de protection (2), les unes en face des autres ou décalées les unes par rapport aux autres.

5. Élément de support de tableau de bord (1) selon l'une des revendications 2 à 4, **caractérisé en ce qu'**une ou plusieurs surfaces de fixation (8) sont formées dans une ou plusieurs poches (6) du cadre de fixation de module (3).

6. Élément de support de tableau de bord (1) selon l'une des revendications 2 à 5, **caractérisé en ce qu'**une ou plusieurs surfaces de fixation (6) sont vissées au module de coussin gonflable de protection pour passager (4).

7. Élément de support de tableau de bord (1) selon l'une des revendications 2 à 6, **caractérisé en ce qu'**une ou plusieurs surfaces de fixation (8) sont formées de façon sensiblement parallèle à la surface de l'élément de support de tableau de bord (1).

8. Élément de support de tableau de bord (1) selon l'une des revendications précédentes, **caractérisé en ce que** le cadre de fixation de module (3) est conformé partiellement ou entièrement avec plusieurs parois, de préférence avec une double paroi, le long de la circonférence de l'ouverture de sortie du coussin gonflable de protection (2).

9. Élément de support de tableau de bord (1) selon la revendication 8, **caractérisé en ce que** le cadre de fixation de module (3) est conformé avec plusieurs parois, de préférence avec une double paroi, dans une partie d'angle de l'ouverture de sortie du coussin gonflable de protection (2).

10. Élément de support de tableau de bord (1) selon l'une des revendications précédentes, **caractérisé en ce que** le cadre de fixation de module (3) est relié par des nervures (9) à l'élément de support de tableau de bord (1).

11. Élément de support de tableau de bord (1) selon la revendication 10, **caractérisé en ce que** le cadre de fixation de module (3) est conformé de façon continue ou partielle avec une double paroi le long de la circonférence de l'ouverture de sortie du coussin gonflable de protection (2) et les nervures (9) sont reliées à une paroi intérieure et/ou extérieure (3.1, 3.2), par rapport à l'ouverture de sortie du coussin gonflable de protection, du cadre de fixation de module (3).

12. Élément de support de tableau de bord (1) selon l'une des revendications précédentes, **caractérisé en ce que** le module de coussin gonflable de protection pour passager (4) est fixé exclusivement sur le cadre de fixation de module (3).

13. Élément de support de tableau de bord (1) selon l'une des revendications précédentes, **caractérisé en ce qu'**il est fabriqué à partir d'une matière plastique.
